# EUROPÄISCHE PATENTSCHRIFT

(11) **EP 2 522 863 B1**
(45) Veröffentlichungstag und Bekanntmachung des Hinweises auf die Patenterteilung: **26.08.2015**
(21) Anmeldenummer: 12165623.5
(22) Anmeldetag: 26.04.2012
(51) Int. Cl.: F16B 19/00, F16B 21/00, F16B 19/02

(54) **Verbindungsstift**
Connection piece
Tige de liaison

(30) Priorität: 07.05.2011 DE 202011100393 U
(43) Veröffentlichungstag der Anmeldung: 14.11.2012
(73) Patentinhaber: VAG-Armaturen GmbH, 68305 Mannheim (DE)
(72) Erfinder: Herold, Heribert, 68259 Mannheim (DE)
(74) Vertreter: Charrier, Rapp & Liebau

(56) Entgegenhaltungen:
- DE-A1- 19 922 246
- DE-U1- 9 103 621

## Beschreibung

Die Erfindung betrifft einen Verbindungsstift mit einem konischen Schaft gemäß dem Oberbegriff des Anspruchs 1.

Verbindungsstifte werden in vielen Bereichen der Technik zur Herstellung von losen oder festen Verbindungen und zur Halterung oder Sicherung von Bauteilen eingesetzt. Für die Verbindung von Wellen und Naben werden z.B. vielfach Kegelstifte gemäß DIN 1 oder auch Nietstifte gemäß DIN 7341 eingesetzt.

Kegelstifte haben einen konischen Schaft und sind in der Regel zum Einstecken in eine entsprechende kegelförmige Bohrung bestimmt. Durch Einpressen der Kegelstifte in die Bohrung entsteht eine form- und kraftschlüssige Verbindung, die bei Bedarf wieder gelöst werden kann. Mit Hilfe von Kegelstiften kann zwar eine spielfreie Verbindung erreicht werden, jedoch hat die Erfahrung gezeigt, dass auch Kegelstifte besonders bei Verbindungen, die Vibrationen oder Erschütterungen ausgesetzt sind, zusätzlich gesichert werden müssen. Dies kann z.B. durch Sicherungsverschraubungen am Kegelstift erfolgen. Allerdings sind die zusätzlichen Sicherungsmaßnehmen relativ aufwändig.

Nietstifte nach DIN 7341 weisen einen zylindrischen Schaft mit endseitigen Bohrungen oder Vertiefungen zum Aufbördeln der Enden auf. Durch das Aufbördeln der Enden kann der Nietstift gegen Verlieren gesichert werden. Allerdings kann bei Verbindungen mit Nietstiften keine dauerhafte Spielfreiheit gewährleistet werden.

Aus der DE 199 22 246 A1 ist ein Niet mit einem Kopf und einem rohrförmigen Schaft bekannt. Zur festen Verbindung zweier Bauteile kann der rohrförmige Schaft nach außen gerollt werden, um ein Toroid zu bilden.

Aufgabe der Erfindung ist es, einen Verbindungsstift der eingangs genannten Art zu schaffen, der eine spielfreie Verbindung und eine kostengünstige Sicherung gegen Herausfallen ermöglicht.

Diese Aufgabe wird durch einen Verbindungsstift mit den Merkmalen des Anspruchs 1 gelöst. Zweckmäßige Weiterbildungen und vorteilhafte Ausführungsformen der Erfindung sind Gegenstand der Unteransprüche.

Der erfindungsgemäße Verbindungsstift enthält einen konischen Schaft, wobei der Schaft an seinem Ende mit dem geringeren Durchmesser eine stirnseitige Vertiefung zum Aufbördeln des Endes aufweist. Dadurch wird ein Kegel-Nietstift geschaffen, der eine spielfreie Verbindung zweier Teile mit einer kostengünstigen Sicherung gegen Herausfallen ermöglicht. Der erfindungsgemäße Verbindungsstift kann in eine entsprechende Durchgangsbohrung eingesetzt werden, bis der Verbindungsstift spielfrei in der Bohrung sitzt. Anschließend kann das Ende des Verbindungsstifts mit dem geringeren Durchmesser durch Einführung eines geeigneten Aufweitdorns in die stirnseitige Vertiefung aufgebördelt bzw. aufgeweitet und dadurch axial gesichert werden, so dass der Verbindungsstift auch ohne zusätzliche Sicherungselemente kraft- und formschlüssig in der Durchgangsbohrung gehalten wird.

Der Sicherungsstift ist zweckmäßigerweise in Art eines Kegelstifts mit einem durchgehend konischen Schaft ausgeführt. Die für die Aufbördelung vorgesehene Vertiefung kann vorzugsweise als stirnseitige Bohrung ausgebildet sein.

An dem Ende mit dem größeren Durchmesser kann der Schaft in einer weiteren zweckmäßigen Ausführung mit einer stirnseitigen Zentrierbohrung versehen sein. Die Zentrierbohrung kann bei beidseitigem Zugang zum Verbindungsstift zum Ansetzen einer Gegenhalterung für einen in die Vertiefung passenden Dom eines Aufbördelwerkzeuges zum Aufweiten des vorderen Endes dienen.

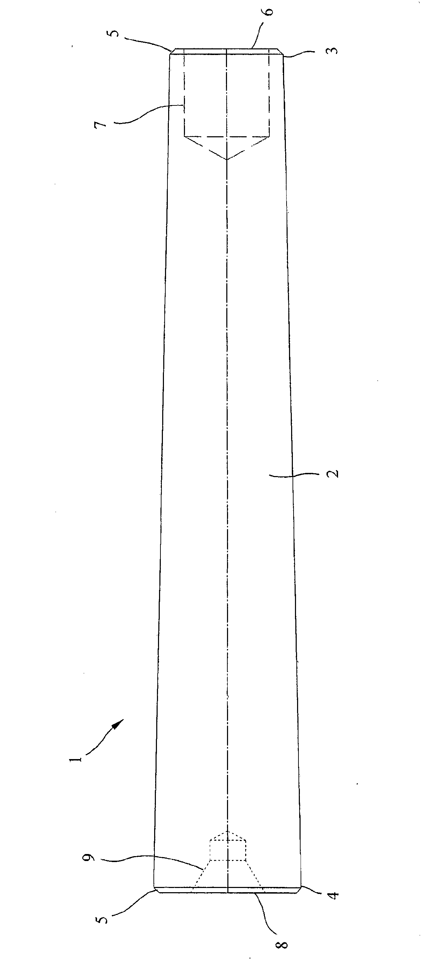

Weitere Besonderheiten und Vorzüge der Erfindung ergeben sich aus der folgenden Beschreibung eines bevorzugten Ausführungsbeispiels anhand der Zeichnung, die einen erfindungsgemäßen Verbindungsstift zeigt.

Der in der Zeichnung dargestellte Verbindungsstift 1 enthält einen konischen Schaft 2, der an seinen vorderen und hinteren Enden 3 und 4 jeweils eine Fase 5 aufweist. Der Verbindungsstift 1 hat einen runden Querschnitt und weist ein Kegelverhältnis von 1:50 auf. In der vorderen Stirnseite 6 an dem Ende 3 mit dem geringeren Durchmesser ist eine als Bohrung ausgeführte stirnseitige Vertiefung 7 zum Aufbördeln des vorderen Endes 3 vorgesehen. In der hinteren Stirnfläche 8 an dem Ende 4 mit dem größeren Durchmesser ist eine Zentrierbohrung 9 vorgesehen. Die Zentrierbohrung 9 kann bei beidseitigem Zugang zum Verbindungsstift 1 zum Ansetzen einer Gegenhalterung für einen in die Vertiefung passenden Dom eines Aufbördelwerkzeuges für das Aufweiten des vorderen Endes 3 dienen.

Der erfindungsgemäße Verbindungsstift 1 wird z.B. zur Verbindung von einer Welle und Nabe in eine entsprechende Durchgangsbohrung eingesetzt, bis der Verbindungsstift 1 spielfrei in der Bohrung sitzt. Anschließend wird das gegenüber der Durchgangsbohrung vorstehende vordere Ende 3 des Verbindungsstifts 1 durch Einführung eines geeigneten Aufweitdorns in die stirnseitige Vertiefung 7 aufgebördelt bzw. aufgeweitet und dadurch axial gesichert, so dass der Verbindungsstift 1 auch ohne zusätzliche Sicherungselemente kraft- und formschlüssig in der Durchgangsbohrung gehalten wird.

## Patentansprüche

1. Verbindungsstift (1) mit einem konischen Schaft (2), **dadurch gekennzeichnet, dass** der Schaft (2) an seinem Ende (3) mit dem geringeren Durchmesser eine stirnseitige Vertiefung (7) zum Aufbördeln dieses Endes (3) aufweist.

2. Verbindungsstift nach Anspruch 1, **dadurch gekennzeichnet, dass** der Schaft (2) durchgehend konisch ausgebildet ist.

3. Verbindungsstift nach Anspruch 1 oder 2, **dadurch gekennzeichnet, dass** die Vertiefung (7) als stirnseitige Bohrung ausgebildet ist.

4. Verbindungsstift nach einem der Ansprüche 1 bis 3, **dadurch gekennzeichnet, dass** der Schaft (2) an seinem Ende (4) mit dem größeren Durchmesser eine stirnseitige Zentrierbohrung (9) aufweist.

5. Verbindungsstift nach einem der Ansprüche 1 bis 4, **dadurch gekennzeichnet, dass** der Schaft (2) an seinen beiden Enden (3, 4) jeweils eine Fase (5) aufweist.

6. Verbindungsstift nach einem der Ansprüche 1 bis 5, **dadurch gekennzeichnet, dass** der konische Schaft (2) ein Kegelverhältnis von 1:50 aufweist.

## Claims

1. Connecting pin (1) with a tapering shank (2), **characterised in that** at its end (3) with the smaller diameter the shank (2) exhibits a recess (7) in its end face for flanging of this end (3).

2. Connecting pin according to claim 1, **characterised in that** the shank (2) is embodied as a continuous taper.

3. Connecting pin according to claim 1 or 2, **characterised in that** the recess (7) is embodied as a bore in the end face.

4. Connecting pin according to one of claims 1 to 3, **characterised in that** at its end (4) with the larger diameter the shank (2) exhibits a centring bore (9) in the end face.

5. Connecting pin according to one of claims 1 to 4, **characterised in that** at both its ends (3, 4) the shank (2) exhibits a chamfer (5).

6. Connecting pin according to one of claims 1 to 5, **characterised in that** the tapering shank (2) exhibits a taper ratio of 1:50.

## Revendications

1. Broche de liaison (1) pourvue d'une tige (2) conique, **caractérisée en ce que** la tige (2) présente, à son extrémité (3) ayant le diamètre le plus petit, une cavité (7) côté frontal servant à sertir ladite extrémité (3).

2. Broche de liaison selon la revendication 1, **caractérisée en ce que** la tige (2) est réalisée de manière conique de bout en bout.

3. Broche de liaison selon la revendication 1 ou 2, **caractérisée en ce que** la cavité (7) est réalisé sous la forme d'un alésage côté frontal.

4. Broche de liaison selon l'une quelconque des revendications 1 à 3, **caractérisée en ce que** la tige (2) présente, à son extrémité (4) ayant le plus grand diamètre, un alésage centré (9) côté frontal.

5. Broche de liaison selon l'une quelconque des revendications 1 à 4, **caractérisée en ce que** la tige (2) présente, au niveau de ses deux extrémités (3, 4), respectivement un biseau (5).

6. Broche de liaison selon l'une quelconque des revendications 1 à 5, **caractérisée en ce que** la tige conique (2) présente un rapport de cône de 1:50.
